# EUROPÄISCHE PATENTANMELDUNG

(11) **EP 1 361 175 A2**
(43) Veröffentlichungstag der Anmeldung: **12.11.2003**
(21) Anmeldenummer: 03007194.8
(22) Anmeldetag: 29.03.2003
(51) Int. Cl.: B65D 90/00

(54) **Befestigungsvorrichtung für Behälter**

(30) Priorität: 08.05.2002 DE 10220727
(71) Anmelder: Hüffermann Fahrzeugtechnik GmbH, 27793 Wildeshausen (DE)
(72) Erfinder: Stach, Lothar, Dr., 27793 Wildehausen (DE)
(74) Vertreter: Pott, Ulrich, Dipl.-Ing.

(57) **Zusammenfassung**

Die Erfindung bezieht sich auf eine Befestigungsvorrichtung für Behälter, beispielsweise für Wechselbehälter, mit einem in eine behälterseitige Aufnahme einsetzbaren sowie mit einem Zug- und/oder Hebeteil verbindbaren Befestigungselement 1. Die Befestigungsvorrichtung zeichnet sich dadurch aus, daß das Befestigungselement 1 zumindest eine Öffnung 5 umfassende Befestigungstasche 3, 4 für ein aufnahmeseitiges Verbindungselement hat, daß das Befestigungselement 1 in der Aufnahme verschwenkbar ausgebildet ist und daß das Befestigungselement 1 einen Anschlag 6 zur Begrenzung seiner Schwenkbewegung in der behälterseitigen Aufnahme hat.

## Beschreibung

Die Erfindung bezieht sich auf eine Befestigungsvorrichtung für Behälter, beispielsweise für Wechselbehälter, mit einem in eine behälterseitige Aufnahme einsetzbaren sowie mit einem Zug- und/oder Hebeteil verbindbaren Befestigungselement.

Aus der DE-0029714094 U1 ist eine Vorrichtung zur Aufnahme von z. B. Wechselbehältern über Aufnahmen an der Behälterstirnseite durch korrespondierende werkzeugfeste Aufnahmesysteme wie Seilgeräte, Hakengeräte und dergleichen zum Aufsetzen und Transport auf z. B. Fahrzeuge bekannt. Dabei ist die Aufnahme im unteren Bereich der Behälterstirnseite in einem ausgesparten Bereich als Nische ausgebildet und hat ein entlang einer Achse verschwenkbares Trägerelement mit einem Aufnahmezapfen, so daß durch die Verschwenkbarkeit der Aufnahme mit dem Aufnahmezapfen nach oben und nach unten hin eine Einstellbarkeit der Aufnahme an verschiedene Anbindungssysteme ermöglicht ist. Die Aufnahme entspricht den Abmessungen eines RT-Kettenbalkens nach DIN 30722 sowie vergleichbarer Normen oder Richtlinien (System ACTS).

Aus der DE 68 078 43 U1 ist eine Verladevorrichtung für Nutzfahrzeuge für rollbare Transportbehälter bekannt, bei der mittels einer Seilführung der Behälter auf- und abzuladen ist. Dazu ist das Seil auf Rollen geführt. Die entsprechenden Rollen sind an einer Behälterkupplung festgelegt. Diese Art der Anbindung ist daher auf speziell angepaßte Behälter ausgerichtet. Verschiedene Anbindungssysteme sind damit nicht möglich.

Aus der US 4,740,132 ist eine Vorrichtung zur Aufnahme eines Behälters bekannt, bei der ebenfalls mittels eines Seilzuges der Behälter abgesenkt oder auch aufgenommen werden kann. Dazu ist wiederum am Behälter eine eine Rolle aufweisende Behälterkupplung vorgesehen, die jedoch auch wiederum auf das speziell zu verwendende Anbindungssystem beschränkt ist.

Es ist Aufgabe der vorliegenden Erfindung, unter Beibehaltung der aus der DE 297 14 094 U1 bekannten behälterseitigen Aufnahmevorrichtung, die sich in der Praxis bewährt hat, eine Befestigungsvorrichtung für Behälter zu schaffen, die in optimierter Ausbildung bevorzugt in solche Aufnahmen einsetzbar ist.

Zur Lösung dieser Aufgabe zeichnet sich die Befestigungsvorrichtung der eingangs genannten Art dadurch aus, daß das Befestigungselement zumindest eine eine Öffnung umfassende Befestigungstasche für ein aufnahmeseitiges Verbindungsglied hat, daß das Befestigungselement in der Aufnahme verschwenkbar ausgebildet ist und daß das Befestigungselement einen Anschlag zur Begrenzung seiner Schwenkbewegung in der behälterseitigen Aufnahme aufweist.

Damit ist eine Befestigungsvorrichtung zur Verfügung gestellt, bei der sich das Befestigungselement mit geringem Aufwand in der behälterseitigen Aufnahme festlegen läßt, indem es in diese eingesetzt wird und sich nach einer Schwenkbewegung über den vorgesehenen Anschlag sicher mit der Aufnahme verbinden läßt.

Bevorzugtermaßen ist jeweils eine Befestigungstasche beidseits eines mittleren Zentralbereiches vorgesehen, wobei der Anschlag des Befestigungselements hakenförmig und derart exzentrisch bzw. außermittig zur Schwenkachse des Befestigungselementes vorgesehen ist, daß sich durch die Verlagerung des Schwerpunktes des Befestigungselementes nach außerhalb der Schwenkachse auch eine selbsttätige Arretierung des Befestigungselementes z. B. an einem Kettenbock realisieren läßt.

In einer besonders bevorzugten Ausbildung der Befestigungsvorrichtung ist das Befestigungselement als Befestigungselement für ein Zugmittel wie ein Zugseil ausgebildet, und hat eine Führungsbahn für ein derartiges Zugmittel. Um dabei z. B. einen Behälter mittels dieses Zugmittels über eine Umlenkrolle auf eine Standfläche zu ziehen, ist nach einer bevorzugten Ausbildung das Befestigungselement derart ausgebildet, daß es über eine solche Zugmittelumlenkrolle zu bewegen bzw. an dieser abzurollen ist. Dazu hat das Befestigungselement bevorzugtermaßen eine gerundete Außengestalt und kann bereichsweise in eine derartige Umlenkrolle eintauchen. Befestigungstaschen haben dazu zweckmäßigerweise einen Abstand zu den Außenrändern des Befestigungselementes.

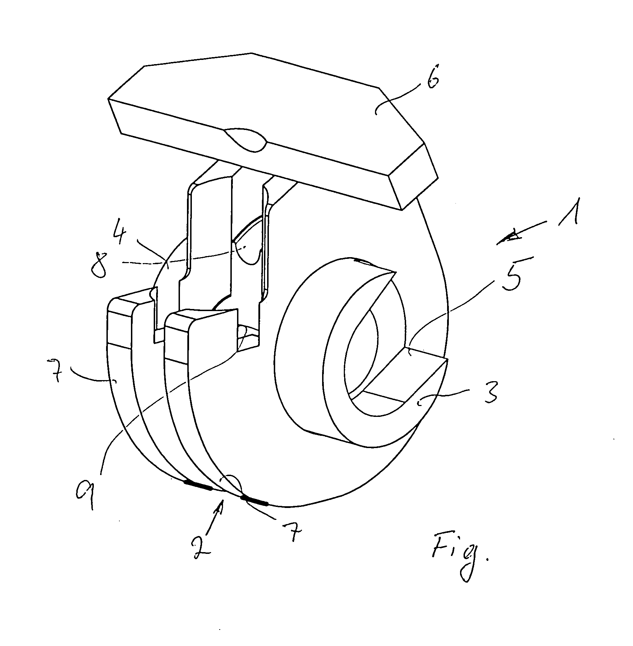

Wesentliche weitere Ausgestaltungen und Vorteile der Erfindung ergeben sich aus weiteren Unteransprüchen, der nachfolgenden Beschreibung und der Zeichnung.

In der Zeichnung ist ein Ausführungsbeispiel eines Befestigungselementes einer Befestigungsvorrichtung nach der Erfindung dargestellt.

In der zeichnerischen Darstellung (Fig.) ist allgemein mit 1 ein Befestigungselement einer im einzelnen nicht näher dargestellten Befestigungsvorrichtung für einen Behälter beziffert. Die Befestigungsvorrichtung soll eine behälterseitige Aufnahme haben, wie sie z. B. im einzelnen näher in dem DE 297 14 094 U1 der Anmelderin im einzelnen beschrieben ist.

Beidseits eines mittleren Zentralbereiches 2 hat dieses Befestigungselement 1 Befestigungstaschen 3 und 4, die jeweils eine Öffnung 5 haben. Diese Befestigungstaschen 3 bzw. 4 können zur Verbindung mit der behälterseitigen Aufnahme über die Öffnung 5 in z. B. Aufnahmezapfen der behälterseitigen Aufnahme tauchen, wobei der mittlere Bereich 2 zwischen Stirnkanten von benachbarter Zapfen gelegen ist. Nach Einführung des Befestigungselementes 1 in die Aufnahme bzw. auf die entsprechenden Aufnahmezapfen ist das Befestigungselement zu verschwenken und zwar mit einem dartigen Schwenkradius, daß der hakenförmige Anschlag 6 an einem Gegenanschlag in der Aufnahme anliegt. Die Öffnung 5 ist mit verschwenkt, so daß das Befestigungselement in der Aufnahme arretiert ist.

Der Anschlag 6 ist dabei auf den äußeren Rändern des mittleren Zentralbereiches 2 und mithin außerhalb der Schwenkachse innerhalb der Befestigungstaschen 3 und 4 vorgesehen, so daß der Schwerpunkt außerhalb der Schwenkachse des Befestigungselementes gelegen ist. Das Befestigungselement 1 läßt sich dadurch nach Einsetzen selbsttätig in die Verriegelungsstellung in der Aufnahme überführen. Der mittlere Zentralbereich 2 hat zwei scheibenförmige Bereiche 7, zwischen denen eine Führungsbahn 8 für ein Zugmittel, beispielsweise ein Zugseil ausgebildet ist. Diese Führungsbahn mündet in eine Aufnahme 9 für ein entsprechendes Zugmittel. Die kreisschreibensegmentförmigen Bereiche 7 sind mithin gerundet ausgebildet und derart gestaltet, daß sie entlang einer Umlenkrolle abrollen können, wenn beispielsweise mittels des Befestigungselementes und mittels der Befestigungsvorrichtung insgesamt ein Behälter auf einen Rahmen oder ein Fahrzeug mittels eines Zugseiles gezogen werden sollen, wobei eine Umlenkrolle für das Zugseil vorgesehen ist. Dies ist im einzelnen näher in der parallel eingereichten Patentanmeldung 102 50 678.7-42 der Anmelderin beschrieben, worauf ausdrücklich verwiesen wird.

## Patentansprüche

1. Befestigungsvorrichtung für Behälter, beispielsweise für Wechselbehälter, mit einem in eine behälterseitige Aufnahme einsetzbaren sowie mit einem Zug- und/oder Hebeteil verbindbaren Befestigungselement, **dadurch gekennzeichnet, daß** das Befestigungselement (1) zumindest eine mit einer Öffnung (5) versehene Befestigungstasche (3, 4) für ein aufnahmeseitiges Verbindungsglied hat, daß das Befestigungselement (1) in der Aufnahme verschwenkbar ausgebildet ist und daß das Befestigungselement (1) einen Anschlag (6) zur Begrenzung seiner Schwenkbewegung in der behälterseitigen Aufnahme aufweist.

2. Befestigungsvorrichtung nach Anspruch 1, **dadurch gekennzeichnet, daß** das Befestigungselement (1) beidseits eines mittleren Zentralbereiches (2) jeweils eine mit einer Aufnahmeöffnung (5) versehende Befestigungstasche (3, 4) aufweist.

3. Befestigungsvorrichtung nach Anspruch 1 oder 2, **dadurch gekennzeichnet, daß** der Anschlag (6) des Befestigungselementes (1) hakenförmig ausgebildet ist.

4. Befestigungsvorrichtung nach Anspruch 3, **dadurch gekennzeichnet, daß** der hakenförmige Anschlag (6) exzentrisch zur Schwenkachse des Befestigungselementes (1) vorgesehen ist.

5. Befestigungselementvorrichtung nach Anspruch 3 oder 4, **dadurch gekennzeichnet, daß** das Befestigungselement (1) über den Anschlag (6) in der behälterseitigen Aufnahme verriegelbar ist.

6. Befestigungsvorrichtung nach einem der Ansprüche 1 bis 5, **dadurch gekennzeichnet, daß** das Befestigungselement (1) eine Aufnahme (9) für ein Zugmittel aufweist.

7. Befestigungsvorrichtung nach Anspruch 6, **dadurch gekennzeichnet, daß** das Befestigungselement eine Führungsbahn (8) für ein Zugmittel wie Zugseil aufweist.

8. Befestigungsvorrichtung nach einem der Ansprüche 1 bis 7, **dadurch gekennzeichnet, daß** das Befestigungselement (1) zumindest bereichsweise an einer Umlenkrolle abrollbar ausgebildet ist.

9. Befestigungsvorrichtung nach einem der Ansprüche 1 bis 8, **dadurch gekennzeichnet, daß** der Innenbereich der Befestigungstasche (3, 4) im wesentlichen im Querschnitt U-förmig gestaltet ist.

10. Befestigungsvorrichtung nach einem der Ansprüche 1 bis 9, **dadurch gekennzeichnet, daß** die Befestigungstasche (3, 4) mit einem Abstand zu Außenrändern des Befestigungselementes (1) vorgesehen ist.
